# EUROPEAN PATENT APPLICATION

(11) **EP 4 640 424 A1**
(43) Date of publication of application: **29.10.2025**
(21) Application number: 24382430.7
(22) Date of filing: 22.04.2024
(51) Int. Cl.: B32B 3/06, B27D 1/10, B32B 7/03, B32B 7/12, B32B 21/13, B32B 21/14

(54) **STRUCTURAL LVL BEAM**

(71) Applicant: Grupo Garnica Plywood, S.A.U., 26007 Logroño (ES)
(72) Inventor: ALBIÑANA GARCÍA-DIHINX, Juan, 26140 LARDERO (ES); ARRIZABALAGA MENDIGUREN, Ugutz, 20600 EIBAR (ES); SAMANES PEREZ, Eva, 26007 LOGROÑO (ES)
(74) Representative: Galbaian S.Coop.

(57) **Abstract**

Structural LVL beam comprising a plurality of LVL boards (2), each of said LVL boards (2) comprising a face veneer (20), a counterface veneer (21) and a plurality of core veneers (22-26) disposed between the face veneer (20) and the counterface veneer (21), said veneers (20-26) being glued together, at least one of said veneers (20-26) being of pine and at least one of said veneers (20-26) being of eucalyptus (20-26), the plurality of LVL boards (2) being longitudinally assembled by means of glued joints (10).

## Description

### TECHNICAL FIELD

The present invention relates to a structural LVL beam.

### PRIOR ART

Among the wood materials used today is LVL wood ("Laminated veneer lumber"), also known as micro-laminated wood. LVL is an evolution of glued laminated timber and plywood, and its manufacturing process is similar to the manufacturing process of glued laminated timber and plywood.

LVL wood consists of at least 5 veneers, each veneer being glued to another veneer with the fibres in the same direction by means of an adhesive. In some cases, some veneers are glued perpendicular to the longitudinal direction of the fibre, but not more than 20% of the number of veneers. LVL differs from glued laminated timber in that veneers are obtained by peeling and are only 6 mm thick, whereas glued laminated timber are about 10-30 mm thick and are obtained by sawing; and it differs from plywood in that in plywood veneers alternate between veneers parallel to the fibre and veneers perpendicular to the fibre.

LVL wood is known to be used both for making LVL boards and for making LVL beams. Known LVL beams are beams that are manufactured in one piece and cut to the desired length.

On the other hand, it is known to assemble solid wood parts by means of glued joints, e.g. finger joints, scarf joints or W-joints. The finger joint method is based on creating a serration at the ends to be joined and using an industrial adhesive to join the serrated ends. The scarf joint method is based on generating a chamfer on the ends to be joined and using an industrial adhesive to join the chamfered ends. The W-joint method is based on generating a W-shape at the ends to be joined and using an industrial adhesive to join these ends in W.

### DISCLOSURE OF THE INVENTION

The object of the invention is to provide a structural LVL beam, as defined in the claims.

The structural LVL beam of the invention comprises a plurality of LVL boards. Each of said LVL boards comprises a face veneer, a counterface veneer and a plurality of core veneers which are disposed between the face veneer and the counterface veneer, said veneers being glued together.

At least one of the veneers that make up each of the LVL boards is made of pine, with at least another of the veneers being made of eucalyptus.

The plurality of LVL boards are longitudinally assembled by glued joints, preferably by finger joints, scarf joints or W-joints.

LVL wood offers, among other properties, high bending strength, good fire resistance and low weight, making it a suitable material for structural applications.

Pine and eucalyptus are fast-growing tree species with optimal physico-chemical properties for structural applications.

The fact of using glued joints to longitudinally assemble the LVL boards that make up the structural LVL beam of the invention makes it possible to dispense with the use of metallic materials to make these joints, providing greater fire integrity due to less significant heat conduction inside the beam. Furthermore, as the structural LVL beams do not have to be manufactured in the desired final length, but rather the desired final length is obtained by assembling several LVL boards, it is possible to manufacture these structural beams in installations in which boards of standard lengths are manufactured, such as 2 or 2.5 metres, and therefore the requirements to be met by these installations are less demanding.

The development of LVL beams, compared to concrete, aluminium and/or steel based structural elements, leads to a significant reduction of carbon emissions in the production process, while wood is a sustainable material that is formed by capturing CO₂ from the environment. In addition, wood, being a poor conductor of heat, offers good thermal insulation and at the same time a better fire resistance than those offered by iron or concrete; since when a fire starts, the surface of the wood in contact with the flames is carbonised; generating an even more insulating layer if possible.

These and other advantages and features of the invention will become apparent in view of the figures and the detailed description of the invention.

### DESCRIPTION OF THE DRAWINGS

Figure 1 shows a view of a structural LVL beam according to a first embodiment of the invention.
Figure 2 is a detail view of a finger joint glued joint of the structural LVL beam of figure 1.
Figure 3 is a partial view of two of the LVL boards that make up the LVL beam of figure 1, the ends of the LVL boards being unassembled.
Figure 4 is a side view of one of the LVL boards that make up the structural LVL beam of figure 1.
Figure 5 is a detail view of a scarf joint glued joint of a structural LVL beam according to a second embodiment of the invention.
Figure 6 is a partial view of two of the LVL boards that make up the structural LVL beam of figure 5 with the ends of the LVL boards unassembled.
Figure 7 is a detail view of a W-type glued joint of a structural LVL beam according to a third embodiment of the invention.
Figure 8 is a partial view of two of the LVL boards that make up the structural LVL beam of figure 7 with the ends of the LVL boards unassembled.

### DETAILED DISCLOSURE OF THE INVENTION

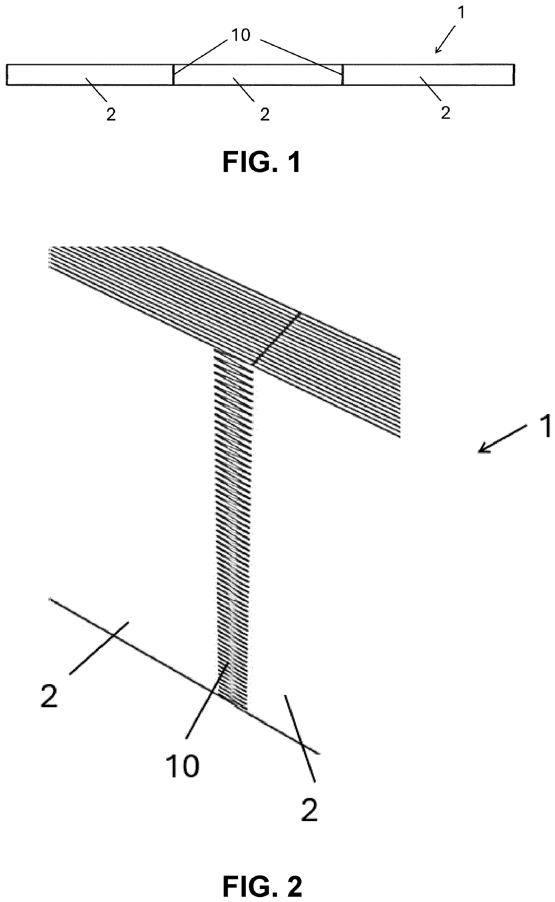

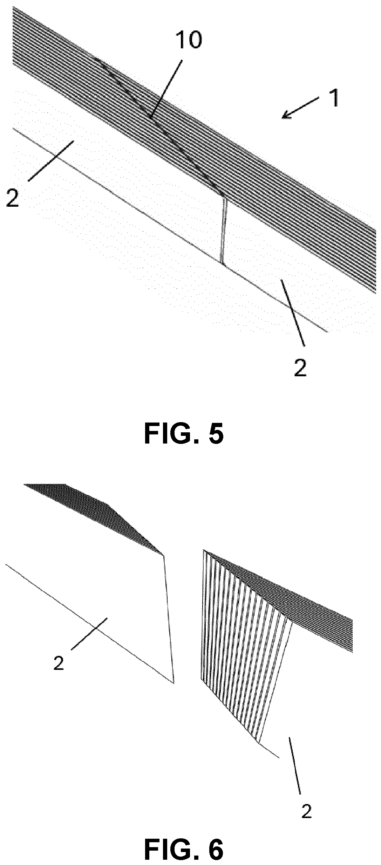

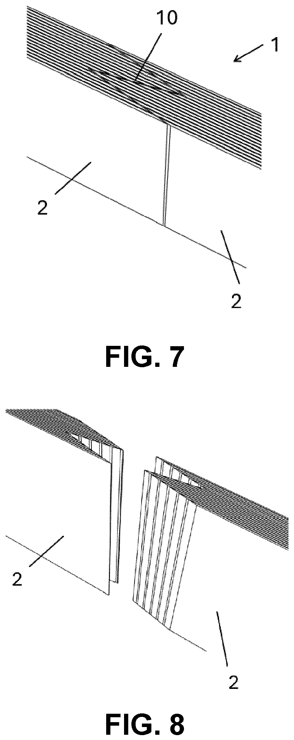

Figures 1 to 4 show a first embodiment of the invention in which the LVL boards 2 forming the structural LVL beam 1 are assembled by means of a finger joint. Figures 5 and 6 show a second embodiment of the invention in which the LVL boards 2 forming the structural LVL beam 1 are assembled by means of a scarf joint. Figures 7 and 8 show a third embodiment of the invention in which the LVL boards 2 forming the structural LVL beam 1 are assembled by means of a W-joint.

The structural LVL beam 1 of the invention is preferably configured for use as a structural element in houses.

The structural LVL beam 1 of the invention comprises a plurality of LVL boards 2 longitudinally joined together. In this way, the invention makes it possible to manufacture large sized structural LVL 1 beams, preferably LVL 1 structural beams of 7 to 12.5 metres from standard sized LVL 2 boards, preferably from 2.5 metre LVL 2 boards. Preferably all LVL boards 2 forming the structural LVL beam 1 have a similar composition.

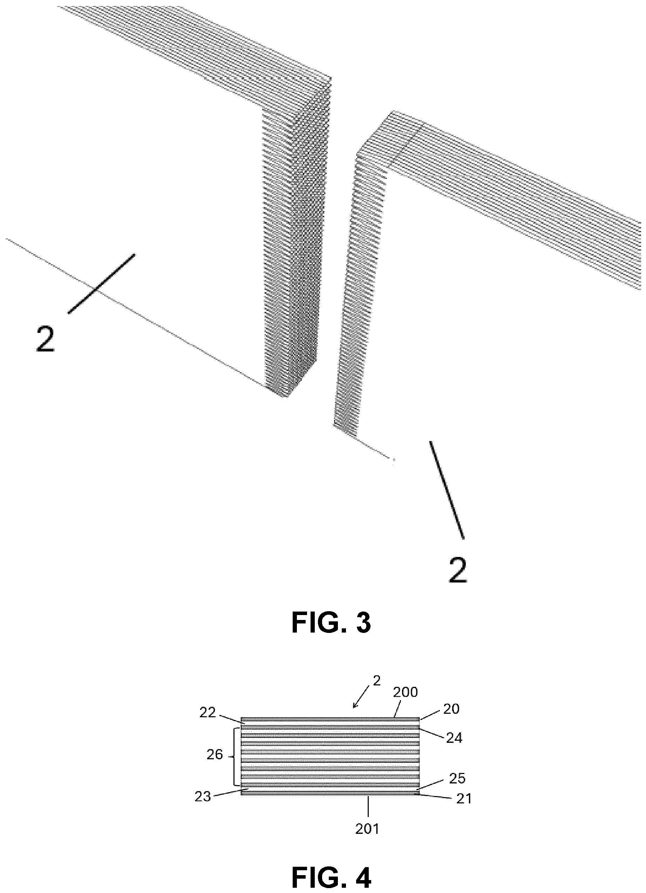

Each of the LVL boards 2 forming the structural LVL beam 1 comprises a face veneer 20, a counterface veneer 21 and a plurality of core veneers 22-26 which are arranged between the face veneer 20 and the counterface veneer 21, as shown for example in figure 4. The veneers 20-26 forming each LVL board 2 are glued together.

At least one of said veneers 20-26 is made of pine, preferably radiata pine, and at least another of said veneers 20-26 is made of eucalyptus, preferably eucalyptus globulus. The incorporation of eucalyptus globulus, which is a tree species with high mechanical properties, makes it possible to gain efficiency, meaning it allows the necessary requirements to be obtained using less wood, obtaining slimmer sections that do the same job as, for example, LVL beams made only with coniferous species, which are the most common option on the market today.

The plurality of LVL boards 2 forming the structural LVL beam 1 are longitudinally assembled by means of glued joints 10.

Preferably said glued joints 10 are of the finger joint type, as shown for example in the first embodiment of the invention. Preferably the finger joint 10 between the LVL boards 2 is made by means of teeth of a height of between 15 and 20 mm, more preferably of approximately 20 mm. Furthermore, such teeth preferably have a base of between 0.6 mm and 1 mm, and a pitch between teeth of between 3.8 mm and 6.2 mm. The use of finger joint technology makes it possible to join LVL boards 2 in such a way that the physical properties of the resulting structural LVL beam 1 are homogeneous and suitable for structural applications. In particular, it should be noted that finger joints have no effect on the deflection of the LVL 1 structural beam. In addition, the finger joint provides a better use of the LVL boards 2 compared to other types of glued joints, as it increases the jointing surface of the two ends to be joined by reducing the section of the LVL boards 2 that overlap to make the joint.

Alternatively, the glued joints 10 may be scarf joints, as shown for example in the second embodiment of the invention, or W-shaped joints, as shown for example in the third embodiment of the invention.

Preferably each LVL board 2 comprises at least five core veneers 22-26, the second core veneer 24 counted from the face veneer 20 and the second core veneer 25 counted from the counterface veneer 21 being glued to the adjoining core veneers 21, 22, 26 perpendicular to the fibre direction, the rest of the veneers 20, 21, 22, 22, 23, 26 forming the LVL board 2 being glued in the same fibre direction. The arrangement of the second core veneers 24, 25 perpendicular to the fibre direction provides flatness and dimensional stability to the LVL 2 board. More preferably said second core veneers 24, 25 are made of pine, preferably radiata pine.

Preferably at least one core veneer 26 of pine, preferably radiata pine, is arranged between the second core veneers 24, 25. More preferably a plurality of pine core veneers 26 are arranged between the second core veneers 24, 25.

Preferably the first core veneers 22, 23 arranged next to the face veneer 20 and the counterface veneer 21 are made of eucalyptus, more preferably eucalyptus globulus.

Preferably the face veneer 20 and the counterface veneer 21, i.e. the outer veneers 20 and 21 of the LVL board 2 are made of pine, most preferably radiata pine.

Combining the arrangement and nature of the veneers 20-26 explained above maximises the physical properties of the board.

Preferably the face veneer 20 and the counterface veneer 21 have a fire resistance treatment applied. Alternatively, to increase the fire resistance each LVL board 2 may comprise a physical barrier for example in the form of a board made of flame retardant mineral polymers, densified rock wool or magnesium oxide boards. Such a physical barrier could be arranged either on the outer surface 200 of the face veneer 20 and on the outer surface 210 of the counterface veneer 21, or between the face veneer 20 and the first core veneer 22 and between the counterface veneer 21 and the first core veneer 23.

Fire resistance treatments with flame retardant and/or intumescent technologies are aimed at providing the structural LVL 1 beam with a fire resistance and reaction to fire suitable for the purpose of the product as a structural element.

Furthermore, the combination of these fire resistance treatments, together with the fact that the glued joints 10 between the LVL boards 2 that make up the structural LVL beam 1 do not use metal connecting elements, minimises the effective cross-section necessary for the structural LVL beam 1 to meet the required requirements and therefore optimises the use of the necessary wood. In addition, it makes it possible to dispense with layers of other materials, such as plasterboard coatings, traditionally used to give wood fire resistance.

Preferably the outer surface 200 of the face veneer 20 and the outer surface 210 of the counterface veneer 21 have a digital printing treatment applied.

The digital printing treatment improves the appearance of the final product, enhancing its potential as a decorative structural element, without the need to use coatings, obtaining a decorative product with a high design flexibility. In addition, the application of digital printing technology is associated with a reduction of volatile compounds that emanate from the wood itself, as well as from the adhesives used during its manufacture.

Furthermore, the digital printing treatment is preferably carried out using intumescent paints, which can be in the form of dye, varnish or thin film coatings, capable of forming a thermal insulation once burnt thanks to the generation of an expanded and insulating carbonaceous mass that has a very low thermal conductivity, increasing the fire resistance of the structural LVL beam 1.

In this way, the use of digital printing provides extra fire resistance to the final structural product by reducing its actual cross-section, and at the same time improves its aesthetic appearance.

## Claims

1. Structural LVL beam comprising a plurality of LVL boards (2), each of said LVL boards (2) comprising a face veneer (20), a counterface veneer (21) and a plurality of core veneers (22-26) disposed between the face veneer (20) and the counterface veneer (21), said veneers (20-26) being glued together, at least one of said veneers (20-26) being of pine and at least one of said veneers (20-26) being of eucalyptus (20-26), wherein the plurality of LVL boards (2) are longitudinally assembled by means of glued joints (10).

2. Structural LVL beam according to claim 1, wherein said glued joints (10) are finger joints, scarf joints or W-joints.

3. Structural LVL beam according to claim 1 or 2, wherein said at least one pine veneer is radiata pine.

4. Structural LVL beam according to any one of claims 1 to 3, wherein said at least one eucalyptus veneer is eucalyptus globulus.

5. Structural LVL beam according to any one of claims 1 to 4, wherein each LVL board (2) comprises at least five core veneers (22-26), wherein the second core veneer (24) counted from the face veneer (20) and the second core veneer (25) counted from the counterface veneer (21) are glued to the adjoining core veneers perpendicular to the fibre direction, the remaining veneers (20, 21, 22, 23, 26) forming LVL board (2) being glued in the same fibre direction.

6. Structural LVL beam according to claim 5, wherein said second core veneers (24, 25) are made of pine.

7. Structural LVL beam according to any one of claims 1 to 6, wherein the first core veneers (22, 23) arranged next to the face veneer (20) and the counterface veneer (21) are made of eucalyptus.

8. Structural LVL beam according to any one of claims 1 to 7, wherein the face veneer (20) and the counterface veneer (21) are made of pine.

9. Structural LVL beam according to any one of claims 2 to 8, wherein the finger joint between the LVL boards (2) is made by means of teeth of a height of between 15 and 20 mm, preferably of approximately 20 mm.

10. Structural LVL beam according to any one of claims 1 to 9, wherein the face veneer (20) and the counterface veneer (21) have a fire resistance treatment applied.

11. Structural LVL beam according to any one of claims 1 to 9, wherein each LVL beam (2) comprises a physical barrier to increase the fire resistance of said LVL beam (2), preferably a physical barrier in the form of a plate, said physical barrier being arranged on the outer surface (200) of the face veneer (20) and on the outer surface (210) of the counterface veneer (21), or between the face veneer (20) and the first core veneer (22) and between the counterface veneer (21) and the first core veneer (23).

12. Structural LVL beam according to any one of claims 1 to 11, wherein the outer surface (200) of the face veneer (20) and the outer surface (210) of the counterface veneer (21) have a digital printing treatment applied.

13. Structural LVL beam according to any one of claims 1 to 12, wherein the LVL boards (2) have a standard length of 2.5 m.
